# EUROPEAN PATENT APPLICATION

(11) **EP 2 369 547 A1**
(43) Date of publication of application: **28.09.2011**
(21) Application number: 10155210.7
(22) Date of filing: 02.03.2010
(51) Int. Cl.: G06Q 30/00

(54) **Method and computer program product for displaying marketing material to a customer at a POS unit**

(71) Applicant: RCL Int d.o.o., 1000 Ljubljana (SI)
(72) Inventor: Jernej Jan, 1260 Ljubljana Polje (SI)
(74) Representative: Lucke, Andreas

(57) **Abstract**

Disclosed herein is a computer implement method for displaying marketing material to a customer at a point of sale unit during a POS transaction, comprising the following steps: receiving at a POS from a remote server matching information for associating pieces of marketing material with single articles or one or more classes of articles,
receiving information for identifying the last article that has been scanned or keyed in at the POS unit serving the customer,
associating a piece of marketing material with said last article that has been scanned or keyed in, and
displaying said associated piece of marketing material on a display device at the POS unit.

## Description

### FIELD OF THE INVENTION

The present invention generally relates to point-of-sale (POS) systems. More particularly, the present invention relates to a computer program product and a computer implemented method for displaying marketing material to a customer at a POS unit during a POS transaction.

### BACKGROUND AND RELATED PRIOR ART

Generally, in the field of advertising, two aspects have to be considered. The first aspect is to provide a suitable physical channel for presenting marketing material to a potential customer. Herein, the term "marketing material" may contain any type of advertisement, commercial, infomercial or the like. When devising the presentation channel or medium, a main motivation is to reach the largest number of potential customers at preferably lowest costs. While the motivation for distributing marketing material is business related, establishing and providing suitable communication channels or media is usually based on technical considerations.

The second aspect to consider is how to reach those persons among all potential customers that are the most likely to purchase a product. This aspect is often referred to as "targeting" marketing material. The more specialized a product is, the more important targeting becomes.

As regards the first aspect, instead of providing communication channels exclusively for advertisements, it is often advantageous to share an already existing communication channel and, even better, an audience already associated with it. This is for example the case for TV commercials, where both, the broadcasting infrastructure as well as the audience is shared with the actual television program.

Another example of sharing a communication channel and an audience closely related to the present invention is disclosed in US 7,529,687 B1. Herein, an in-store customer display device and method is disclosed, in which the same display unit used to display purchase information such as price of the last scanned articles or a subtotal price is also used to display marketing material, referred to as "infomercials" in this document. This prior art device comprises a control unit configured to operate the customer display and to access an infomercial database. The infomercial database includes a list of types of trigger events and a corresponding sequence of multimedia entries to be displayed based on the type of trigger event. The trigger event could for example be the end of a point-of-sale transaction.

According to this prior art, a large audience, namely all customers using the POS can be reached with infomercials while sharing an already existing communication channel, namely the POS display device and the POS computer, which have to be provided anyhow at the POS, so that practically no additional hardware costs arise.

### SUMMARY OF THE INVENTION

While the in-store customer display device and method of US 7,529,687 B1 are advantageous in that they allow to reach a large audience with only very little additional cost as compared to an ordinary POS system, it does not yet provide technical means that would allow to selectively address potential customers in an efficient way.

The problem underlying the invention is to provide a method and computer program product for displaying marketing material that provides the technical means for targeting marketing material more selectively to potential customers.

This problem is solved by the computer implemented method of claim 1 and a computer program product according to claim 13. Preferred embodiments are defined in the dependent claims.

In the method of the invention, matching information for associating pieces of marketing material with single articles or one or more classes of articles are received at a POS from a remote server. Further, the method comprises a step of receiving information for identifying the last article that has been scanned or keyed in at the POS unit serving the customer. Then, a piece of marketing material is associated with said last article that has been scanned or keyed in and the associated piece of marketing material is displayed on a display device at the POS unit. Accordingly, the choice of marketing material displayed is triggered by the last article that was scanned or keyed in at the POS unit serving the customer according to some matching information.

Herein, the "POS unit serving the customer" could for example be a cash desk of a retail or wholesale store where articles are scanned. However, the invention is not limited to any specific type of POS unit, instead the POS unit can be any hardware that comprises or is connected to some sort of scanning or other input device. A yet further example for a POS unit serving the customer could for example be an electronic scale provided with some sort of scanning device such as a barcode reader. A further example of a POS unit could be a hand-held device employed in a so-called *personal shopping solution (PSS)* developed by the applicant. In the personal shopping solution, a customer receives a hand-held device with which he or she can scan items him/herself when putting them in the shopping cart, allowing the customer to check prices and review and modify the shopping list. For the purposes of the present invention, this hand-held device could also be regarded as a POS unit serving the customer on which marketing material would be displayed that is triggered by the last article that was scanned by the hand-held device.

The rationale behind this is that it can be assumed that the purchase of a given article or an article from a class of articles would statistically qualify a customer to also be a preferred customer for some other product, article or service. For example, parents of small children spend a substantial amount of money for articles like diapers, baby food, baby clothing and the like, for which customers without small children obviously have no need at all. Accordingly, while placing marketing material directed to diapers would be of very little use for most customers, it could be highly useful if this customer has just bought a related article, such as a pacifier or baby food. By allowing the purchased articles to trigger the displayed marketing material, the success of the marketing can therefore greatly be enhanced.

The success of the marketing scheme, however, will clearly depend on an intelligent linkage between the article or article classes and the marketing material. Such linkage cannot be determined by the operator of the POS, such as the director of a supermarket. Instead, a useful linkage between article and marketing material can best be determined by the company launching the marketing material, and presumably even best by means of some empirical survey. The method and computer program of the invention provide the technical infrastructure for this by allowing the POS to receive the matching information from a remote server. This way, the linkage between marketing material and articles can be established by a remote, central instance according to the creator of the marketing material's view, and the corresponding matching information that is needed by each POS unit can be centrally generated and distributed to an infinite number of POS units. Due to this convenient distribution scheme, the linkage between marketing material and articles can be easily and quickly changed or modified, and this change or modification can be easily implemented at all participating POS units by a corresponding amendment of the matching information communicated to the POS units. Due to the flexibility provided by this scheme, it is especially suitable for an empirical evaluation of the success of the placement of marketing material, because different linkage scenarios can be easily implemented and compared.

Preferably, the matching information is information associating either individual articles with a piece of marketing material or associating an article class including a plurality of articles with a piece of marketing material. For practical purposes, it will not always be possible or useful to assign single individual articles to certain pieces of marketing material. Instead, it could be sufficient or even advantageous to link a piece of marketing material with a class of articles, for example a class related to a certain kind of articles or use of articles. An example for a class of articles could for example be "dairy products" or "alcoholic beverages" if the POS is a supermarket or "skiing equipment" if the POS is a sporting goods store.

Another useful class of articles would for example be a class related to a brand or a manufacturer of articles.

In a preferred embodiment, associating a piece of marketing material with the last scanned or keyed in article is performed in a hierarchical manner, in which it is first checked whether a piece of marketing material is exclusively assigned to the article, and in case it is found that no piece of marketing material is exclusively assigned to the article, it is checked whether the article is part of an article class to which a piece of marketing material is assigned. In a preferred embodiment, there could also be a hierarchy of article classes, where a class related to a kind or use may be preferred over a class related to brand or manufacture.

Preferably, the marketing material is received from the remote server, but it can also be received from another source. Further, the marketing material is preferably stored at the POS unit or a computer associated with said POS unit according to a predefined file directory hierarchy which reflects the hierarchical manner in which the pieces of marketing material are associated with the article. This will be explained in more detail below with reference to a specific embodiment. Herein, the term "computer associated with said POS unit" refers to a case where the computer implemented method is not carried out on the computer of the POS unit itself, but on a computer installed at the POS and connected with the POS unit. This computer could e.g. be connected with a number of POS units and could therefore be used to implement the method for a number of POS units provided at the POS. In the following summary of the invention, wherever applicable the term "POS unit" should be understood to mean the POS unit itself or a computer associated with the POS unit, without further mention.

In a preferred embodiment, the computer implemented method further comprises a step of reporting to the remote server or to another remote unit how often and/or how long a piece of marketing material has been displayed on the display device within a certain period of time. With this information, the owner of the marketing material can be told up to the second how long the marketing material has been played, and can be precisely billed for it. Since reports of this type can be sent from a plurality of retail or wholesale stores to the same server, the information can be centrally collected and evaluated.

Preferably, the marketing material is displayed on the same display as the purchase information related to the POS transaction. Herein, the purchase information is the information for which the display at the POS unit is originally meant and includes for example name, quantity and unit price of the last article that has been scanned or keyed in, subtotal value of purchase for all scanned or keyed in articles for the customer, and a list of all articles purchased by the customer, including name of article, quantity purchased, price and optionally discounts granted to the customer. As mentioned before, at a POS unit such as a cash desk, some sort of display has to be provided anyhow to display this type of purchase information to the customer. According to the invention, preferably a somewhat larger display is employed which in addition to this purchase information leaves room for displaying marketing material. This somewhat larger display is, except for the server, the only additional hardware that is needed for implementing the invention, so that the invention can be employed at very little cost. Preferably, the marketing material is displayed at least for a predetermined minimum time. While generally the display is triggered by the scanning of an article, if the scanning frequency is very rapid, the marketing material should not change at the same rate, as this rapid change would be found disturbing by some customers. Instead, the displayed marketing material is preferably maintained for said predetermined minimum time, and the following display will be triggered by the last scanned article valid when the minimum time has elapsed. This means that as far as the display of marketing material is concerned, one or more scanned articles may be skipped.

Conversely, if there should be a long time between two consecutive scans, for example because the cashier is disrupted or because the cash desk is idle for some other reason, the current piece of marketing material would continue to be displayed, because in the general operation any change of display is triggered by scanning of an article. This may be disadvantageous for two reasons. First of all, the marketing material from its nature will be designed for short display time and may become boring to the customer if displayed for an extended time. Also, from the owner of the marketing material's perspective, showing the same marketing material once for twice the time will not be as effective as showing it twice for half the time to two customers. Secondly, if a long time has passed since the scan of the last article, it may be assumed that the customer, to whom the marketing material was targeted, has left the POS.

According to a preferred embodiment, it is therefore checked whether a predetermined maximum time since the last scanned or keyed in article has passed, and if this is the case, marketing material from a group of marketing material unrelated to an article or class of articles will be displayed, i.e. non-targeted marketing material will be played. Herein, preferably, the displaying of the marketing material is switched to a full display mode, since after the predetermined maximum time has elapsed from the last article scan, the purchase information need no longer be displayed, so that the whole display can be used for playing marketing material.

From a practical point of view, it can be expected that the method of the invention will in many cases have to be retrofitted to existing POS devices. Accordingly, the method and computer program product should be such that it can be easily added or combined with existing systems. Also, the method of the invention heavily relies on a connection between the POS unit and the server, such as to receive up to date matching information and to report playing times of marketing material to the server. However, while the POS system is operated e.g. by a retail or wholesale store, the server for administrating the linkage of marketing material with products will be operated by a different legal entity, which will in fact typically manage and provide the matching information to a large number of POS units operated by a large number of completely independent legal entities, say one or more supermarket chains, a drugstore chain, and maybe 50 independent Tobacco shops to give an example. Clearly, the operators of the POS systems will be reluctant to grant the provider of the matching information access to their POS devices. Consequently, both for the purposes of easier retrofitting as well as for keeping the server and the POS units separate, preferably the communication between the POS units and the server is based on Simple Mail Transfer Protocol (SMTP). In a further preferable embodiment, this communication could also be based on so-called "web-service".

The present invention also provides a computer program product for implementing the method. Herein, the term "computer program product" shall refer to a single software module or a plurality of software modules that may cooperate with each other. The computer program product may in its smallest version be comprised of a display module having an interface for receiving the aforementioned information for identifying an article (such as the articles' EAN) and an interface for receiving the aforementioned matching information. When the display module is executed on a computer, such as the computer of the POS unit, it may execute a method according to one of the above described embodiment. However, the display module need not necessarily be executed on the computer of the POS unit itself. It is conceivable that the computer of the POS unit, such as a PC on which the ordinary cash desk software is installed, does not support two individual LCD displays (one for the cashier and the other for the customer), or that it simply does not meet the basic performance requirements. In cases like this, or for other reasons, the display module may be installed on a separate PC in the store. This separate PC could then carry out the method of the invention for all POS units or a fraction of the POS units in the store.

Further, the computer program product may comprise a management module for administrating the linkage between marketing material and articles in the way described above, which may be running on the aforementioned server. Note that the term "server" is to be understood in a functional way and could be formed by one or more computers.

As a third software component, a distribution layer may be provided which is responsible for the bi-directional communication between each of a plurality of POS units and the server and which allows for distributing marketing material and matching information from the server to the plurality of POS units.

In particular, the distribution layer may be responsible for communicating the aforementioned reports indicating how often and/or how long each of the pieces of marketing material have been displayed at each of a plurality of POS units to the server. Further, the distribution layer may communicate information summarizing the marketing material and the matching information currently stored in each of a plurality of POS units to the server. Herein, the information will be preferably communicated in form of a text file.

Finally, the distribution layer may communicate updated marketing material or matching information from the server to the plurality of POS units. This communication or distribution of updated marketing material may be carried out in response to a comparison of the aforementioned information summarizing the marketing material and matching information currently stored in each POS unit with the current setting for the respective POS unit in the server.

### DESCRIPTION OF THE PREFERRED EMBODIMENT

For the purposes of promoting an understanding of the principles of the invention, reference will now be made to the preferred embodiment illustrated in the drawings and specific language will be used to describe the same. It will, nevertheless, be understood that no limitation of the scope of the invention is intended thereby, such alterations and further modifications in the illustrated computer program product and method and such further application of the principles of the invention as illustrated therein being contemplated as would normally occur now or in the future to one skilled in the art to which the invention relates.
- Fig. 1: shows a schematic view of a display device of a POS unit;
- Fig. 2: is a diagram explaining the functionality of the display module of the invention; and
- Fig. 3: is a schematic diagram illustrating the functionality of the display module, the administration module and the distribution layer.

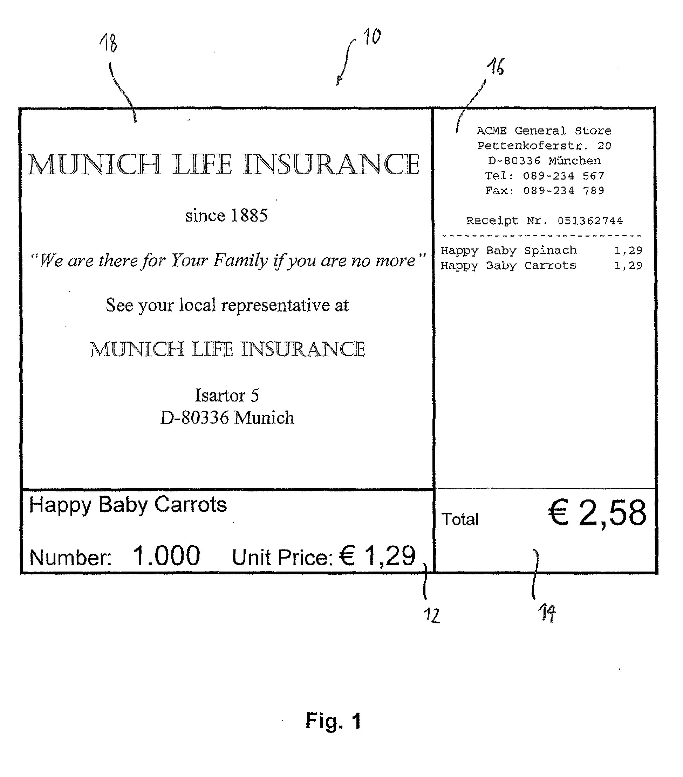

Fig. 1 is a schematic view of a display 10 of a POS unit, which in the present example may be a cash register in a supermarket. As shown in Fig. 1, the display 10 shows purchase related information that one would expect from a cash desk display. In particular, a field 12 shows the name of the last article that was scanned by the scanner (not shown) of the cash desk (a glass of baby food called "Happy Baby Carrots"), the number of scanned articles (one) and its unit price (EUR 1.29). Field 14 shows the subtotal value of purchase of all articles scanned so far for the present customer (EUR 2.58).

Field 16 shows a list of all articles purchased by the present customer, including the name of article (a glass of "Happy Baby Spinach" and a glass of "Happy Baby Carrots"), quantity purchased and price. If some discounts were granted to the customer, they would also be shown in field 16. Note that field 16 looks similar to the printed receipt that the customer will eventually receive after the purchase is completed.

Finally, in field 18 a piece of marketing material is displayed, which in the present example is an advertisement of a life insurance company. Clearly, the target group for life insurances is very limited, as most people acquire only one or two life insurance policies in their lives. Hence, if this advertisement was shown to an arbitrary supermarket customer, it is most likely that this customer either already has obtained a life insurance or does not care about life insurance.

However, the life insurance company would know that most people think about life insurances at the first time when they have a baby. According to the invention, the piece of marketing material displayed in field 18 is triggered by the last scanned article. Accordingly, if the life insurance's advertisement is only triggered when an article related to baby requisites is scanned, the chances of addressing a potential customer are greatly enhanced. This is the rationale behind the invention, which provides the technical means for implementing this scenario.

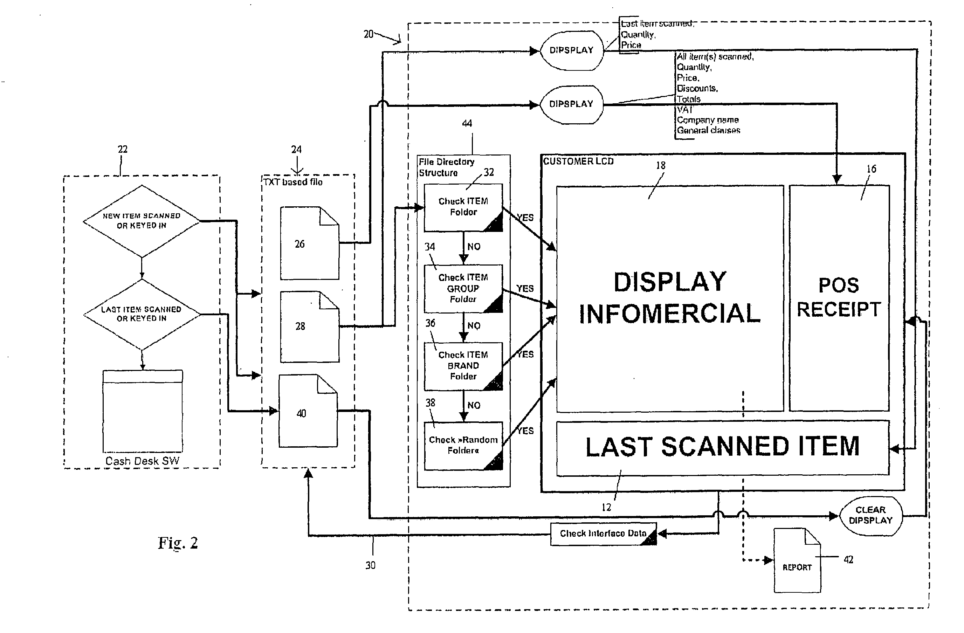

The triggering of displaying marketing material by scanned articles can be implemented by a display module 20 which is a computer program product schematically represented in Fig. 2. In addition to display module 20, Fig. 2 also represents ordinary cash desk software 22 as well as an interface 24 between the ordinary cash desk software 22 and display module 20. The ordinary cash desk software 22 controls the ordinary operation of the cash desk, including the operation of a scanning device (not shown).

For each new scanned article, all the information needed for field 16 is appended to a text based first file 26 which is put to a hard drive location of the POS unit that is available to display module 20. Every new article that is scanned is appended to this file.

The information on the last scanned article, i.e. name of the article, EAN code for article, quantity and price is written to a second text based file 28.

The display module 20 constantly checks the interface data contained in files 26 and 28 of the interface 24, as is indicated by arrow 30. The current content of first file 26, i.e. all articles or items scanned, quantity, price, discounts, totals, VAT, company name and general clauses is displayed in a field "POS receipt", which corresponds to field 16 of Fig. 1 and is therefore designated with the same reference number.

The information on the last article scanned which is held in the second file 28 is displayed in a field called "last scanned item", which corresponds to field 12 in Fig. 1 and is accordingly designated with the same reference sign in Fig. 2.

In order to associate the last scanned article with a piece of marketing information, first an "item folder" is checked to see whether it contains marketing material which is exclusively assigned to the last scanned article (step 32). The "item folder" contains a number of pieces of marketing material which are specifically assigned to a single article, and the corresponding marketing material is designated by the article EAN number, which is obtained when scanning the article and saved in the second text file 28. If a piece of marketing material is found in the "item folder" that is exclusively assigned to the last scanned article, it will be displayed in field 18.

However, it is not necessary that a piece of marketing material is exclusively assigned to any specific article. If no associated marketing material is found, the display module 20 proceeds to check an "item group folder" in step 34. The "item group folder" contains pieces of marketing material that are associated with a certain class of articles, namely articles that belong to a related group according to use or kinds of articles. To give an example, article groups could bye "dairy products", "alcoholic beverages" or "baby requisites". With reference to the example of Fig. 1, it may very well be that the advertisement of the life insurance is not linked to every single individual baby requisite product available in the store, but only to the group "baby requisites" as a whole. If the last scanned article belongs to a group for which an associated marketing material is stored in the "item group folder", the corresponding marketing material will be displayed in field 18.

In the alternative, it is checked in step 36 whether the article belongs to an article class related to brands or manufacturers of articles. Marketing materials associated with certain brands or manufacturers are stored in an "item brand folder". If it is found that the last scanned article belongs to one of the brand-related classes to which a piece of marketing material is assigned, the corresponding marketing material is displayed in field 18.

In the alternative, a "random folder" is checked in step 38. The "random folder" comprises marketing material that is not related to any specific article and will be displayed if no associated marketing material can be found at all.

The hierarchical order in which associated marketing material is searched for is also reflected in the hierarchy of a file directory structure 44 containing the item folder, item group folder, item brand folder and random folder. All the marketing material is available on the local hard drive of the cashier's computer and structured in the predefined file directory hierarchy.

Every selected piece of marketing material will be displayed in field 18 for at least a predefined period of time, for example three seconds, no matter if the scan frequency is higher than this. This will guarantee that every marketing material can be appreciated by the customer, and avoids a more rapid change of display material that may be found disturbing. Only after this predetermined time has elapsed, the display module checks the interface data stored in files 26 and 28 of the interface 24, and the described procedure starts again. If a predetermined maximum time has passed since the last article has been scanned, this is an indication that the cash desk is currently idle. In this case, marketing materials from the random folder 38 are displayed.

When the last article is scanned, i.e. when the cashier concludes the scanning procedure, a third interface file 40 is created and put to the hard drive location available to display module 20. This file clears all the information on the display 10 and prepares the display 10 for the next customer.

Once a day, the display module 20 creates a report 42 on how often and how long each piece of marketing material has been displayed on the displaying device 10. This report is created as an XML file and is sent to a remote server. This XML report 42 contains all the information necessary for the administration of marketing material, in particular billing the displaying of the marketing material to the owner. By centrally collecting and evaluating this type of reports, the owners of the marketing materials can be billed up to the second for an arbitrary number of POS units each sending their reports 42 to the server.

It is worth noting that the report 42 only contains information on the display of certain marketing material, but no further information for example related to articles, sales prices etc. The reason is that the legal entity in charge of administrating the display of marketing material would generally be an entity different from the operator of the POS system, i.e. the operator of the supermarket in the present example. Accordingly, it needs to be ensured that no sales related information leaves the POS. Since the report is an XML file sent by SMTP, it can be easily ensured that no such information leaves the system.

As has been explained above with reference to steps 32 to 38, if an article is to be associated with a piece of marketing material, this is done by an hierarchical order of steps, according to which it is first checked whether a piece of marketing material is exclusively assigned to the article (step 32), and if this is not the case, it is checked whether the article is part of one of a number of predetermined article classes, where again the article classes are checked in a hierarchical order. Namely, in the present example, the "item group" class related to kind or use of the article is preferred over the article class "item brand" relating to brands or manufacturers of articles.

The same hierarchy as applied when associating a piece of marketing material with a given article is reflected in a hierarchical file directory structure which is symbolically represented by reference sign 44 in Fig. 2. In this file directory structure 44, at the upper end of the hierarchy is a the "item folder" in which pieces of marketing material are stored which are assigned to a specific article and can be referenced by the article number. The next two lower positions in the file directory structure hierarchy are occupied by the "item group folder" and the "item brand folder" in which pieces of marketing material are stored that are related to the "item groups-class or "item brand"-class, respectively. At the lowest end of the file directory structure hierarchy is the "random folder" containing pieces of marketing material that are not related to any specific article or article class. It has been found very efficient and convenient to reflect the hierarchy of the association process in the hierarchy of the file directory structure. In fact, the contents of the folders together with the hierarchical file directory structure already define the contents of marketing material as well as the matching information applicable for the respective POS unit or POS unit display.

Further note that there is only a one-way communication between the ordinary cash desk software 22 and the display module 20 via interface 24. In fact, all the ordinary cash desk software 22 has to do is to provide the first text file 26 with purchasing information, the second text file 28 with the EAN number of the last scanned article and third text field 40 indicating that the last article has been scanned for further use by the display module. Clearly, all of this is information is readily available in ordinary cash desk software 22 which therefore does not have to be adapted in any sense except for outputting this information to the interface files. Also, there is no input from the display module 20 to the ordinary cash desk software 22, so that the operator of the POS does not have to worry that his operation could be manipulated in any sense by the display module 20. For this reason, it is not only very easy to add the display module 20 to any existing ordinary cash desk software 22, it can also be expected that the operator of the ordinary cash desk software has no objections against this, because he or she can be sure that the ordinary POS operation will not be affected thereby.

In the present exemplary embodiment, it was assumed that the display module software runs on the same computer as the ordinary cash desk software, i.e. uses the same hardware as the cash desk. While this hardware sharing is advantageous for obvious reasons, it is not necessary for carrying out the invention. Instead, it is equally possible to install the display module software 20 on a computer different from the POS unit computer, as long as this computer is able to receive the interface files 26, 28 and 40 or at least the information contained therein. In some embodiments, it may be preferred to provide a dedicated computer for executing the display module, which could then serve a plurality of POS units within the same store. Such computer would be a "computer associated with the POS unit" in the terminology of the present disclosure.

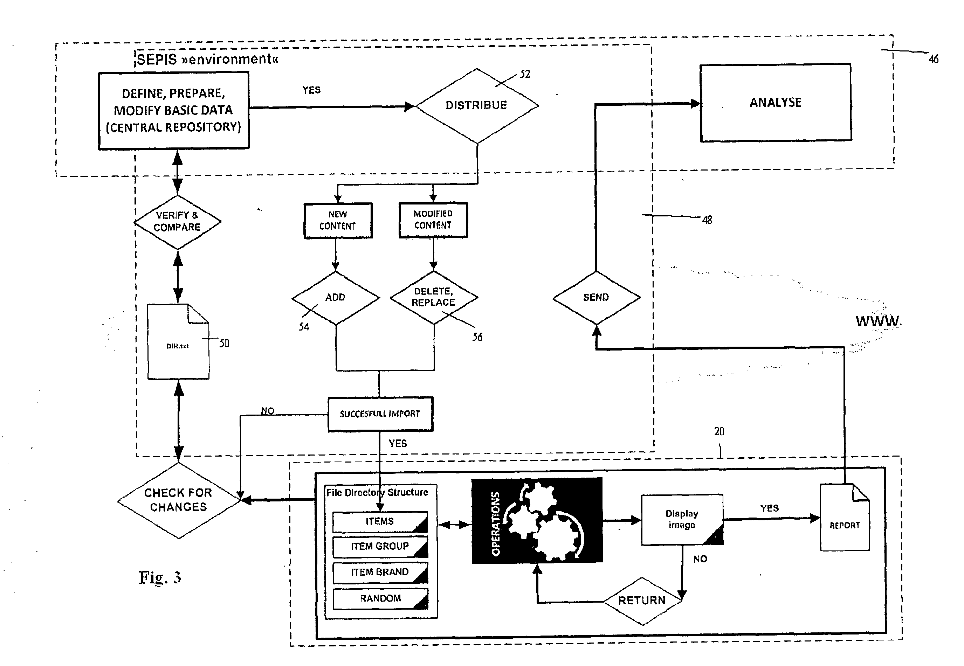

As has been explained above, the content of marketing material as well as the matching information is contained in the file directory structure 44. Thus, for a working system, it is necessary that the file directory structure is a) efficiently imported to the POS unit and b) efficiently and reliably updated. The important aspect of importing and updating marketing material and matching information at each of a plurality of POS units will be described with reference to Fig. 3.

In Fig. 3, a simplified diagram of the display module software 20 is shown, including the file directory structure 44 referred to above. Also, a management module 46 is shown, which runs on the server (not shown). Herein, the term "server" may refer to one or more individual computers.

As a third software element, a distributing layer 48 is provided. The distribution layer 48 is responsible for providing a bi-directional communication between the management module 46 and each of a possibly very large number of POS units with their respective display modules 20, of which only a single one is represented in Fig. 3.

In the present example, the management module 46 is a Windows based multi-user application that enables entry and administration of all basic data and basic rules that are required to manage and operate the displaying method on a generally unlimited number of POS units. When installing the system, the management module 46 needs to be filled out with main data referring to legal entities, points of sale, POS units within each point of sale, POS displays within each POS unit and the like. Once this main data is available in the management module 46, the administrator first chooses one or all POS displays within one POS unit. Once the desired POS displays are selected and confirmed, the administrator may select, i.e. link marketing material to individual articles or article classes (such as item group or item brand). The administrator may also define marketing material for random articles, that would be stored in the "random folder" in the file directory structure 44 at a POS unit.

When the administrator confirms the selection, a data file "DIR.txt" 50 is created automatically, which includes all settings with regard to marketing material contents and matching information for this POS unit. This file can thus be regarded as a "final setting and content definition" for the individual POS unit and can be used as a reference or mirror of the marketing material content and matching information on the individual POS unit.

This type of data file 50 is also used during operation of the system as a reference to check whether some marketing material or matching information has not been successfully imported into each display module 20, as will be explained below.

It is a further responsibility of the management module 46 to distribute new marketing material contents or matching information. This is done via the distribution layer 48 with respect to every single display module 20 served by the management module 46. The distribution, generally referenced to at 52 comprises adding new content (step 54) or deleting/replacing content (step 56) and is carried out by the distribution layer 48. Adding or modifying content means that the contents of the file directory structure 44 at the display module 20 will be modified.

As already indicated above, the display module 20 may generate, from the file directory structure 42, the same type of text file DIR.text 50 that is created by the management module 46. Accordingly, by comparing the text files generated by the management module 46 and created by the display module 20, it can be checked whether the marketing content and matching information as defined by the current status of the file directory structure 42 corresponds to the intended definition of the management module 46. If there is a discrepancy, the management module 46 will add or modify content accordingly via the distribution layer 48 until the state of the file directory structure 42 coincides with the definition of the management module 46.

In addition, the report file 42 that is created by display module 20 will be sent to the management module 46 via the distribution layer 48.

As is apparent from Fig. 3, a combination of a central management module 46, an in principle unlimited number of display modules 20 and a distribution layer for providing communication inbetween allows to very efficiently and quickly update marketing material contents and matching information at each of the POS units. It is further apparent that the import of marketing material at the POS units, the update of marketing material and matching information and the report of number and duration of display times for each of the pieces of marketing material are completely decoupled from the operation of the POS units as such. This is of highest importance, since the legal entity in charge of displaying marketing information will generally be different from the legal entity in charge of the POS units.

Also, while the display module 20 does not at all interfere with the ordinary cash desk software 22 (see Fig. 2 and the discussion thereof), it will nevertheless generally run on the same computer for efficient resource sharing. In order to make sure that the local POS unit computers cannot be spied or corrupted by being hooked to the distribution layer 48, the communication of the communication layer 48 is exclusively carried out by SMTP.

The embodiments described above and the accompanying figures merely serve to illustrate the method according to the present invention, and should not be taken to indicate any limitation of the method. The scope of the patent is solely determined by the following claims.

### REFERENCE SIGNS

- 10: display
- 12: display field (last scanned article)
- 14: display field (subtotal price)
- 16: display field (list of purchased articles)
- 18: display filed (marketing material)
- 20: display module
- 22: ordinary cash desk software
- 24: interface
- 26: first interface file
- 28: second interface file
- 30: operating loop
- 32: item folder checking step
- 34: item group folder checking step
- 36: item brand folder checking step
- 38: random folder checking step
- 40: third interface file
- 42: report file
- 44: file directory structure
- 46: management module
- 48: distribution layer
- 50: text file
- 52: distribution step
- 54: adding step
- 56: delete/replace step

## Claims

1. A computer implemented method for displaying marketing material to a customer at a point of sale (POS) unit during a POS transaction, comprising the following steps:
receiving at a POS from a remote server matching information for associating pieces of marketing material with single articles or one or more classes of articles,
receiving information for identifying the last article that has been scanned or keyed in at the POS unit serving the customer,
associating a piece of marketing material with said last article that has been scanned or keyed in based on said matching information, and
displaying said associated piece of marketing material on a display device at the POS unit.

2. The computer implemented method of claim 1, wherein the matching information is information associating
- an individual article with a piece of marketing material and/or
- an article class including a plurality of articles with a piece of marketing material.

3. The computer implemented method of claim 2, wherein article classes are related to dif ferent kinds or uses of articles and/or brands or manufacturers of articles.

4. The computer implemented method of one of the preceding claims, wherein the steps of associating a piece of marketing material with said article is performed in a hierarchical manner, in which
- it is first checked whether a piece of marketing material is exclusively assigned to the article, and
- in case it is found that no piece of marketing material is exclusively assigned to the article, it is checked whether the article is part of an article class to which a piece of marketing material is assigned.

5. The computer implemented method of claim 4, further comprising a step of receiving said marketing material from said remote server or from another source and storing the same at the POS unit or a computer associated with said POS unit according to a predefined file directory hierarchy reflecting said hierarchical manner in which the pieces of marketing material are associated with the article.

6. The computer implemented method of one of the preceding claims, further comprising a step of reporting to the remote server or an other remote unit how often and/or how long each piece of marketing material has been displayed on the display device.

7. The computer implemented method of one of the preceding claims, in which the marketing material is displayed on the same display as purchase information related to the POS transaction, wherein the purchase information includes one or more of the following:
- name, quantity and unit price of the last article that has been scanned or keyed in at the POS unit,
- subtotal value of purchase for all scanned or keyed in articles for the customer,
- a list of all articles purchased by the customer, including name of article, quantity purchased, price and optionally discounts granted to the customer.

8. The computer implemented method of one of the preceding claims, wherein the marketing material is displayed at least for a predetermined minimum time, and/or
wherein it is checked if a predetermined maximum time since the last scanned or keyed in article has passed, and if this is the case,
displaying a piece of marketing material from a group of marketing material being unrelated to an article or class of articles,
wherein preferably the displaying of the marketing material is switched to a full display mode.

9. The computer implemented method of one of the preceding claims, wherein the communication between the POS unit or a computer associated with said POS unit and the server is based on the Simple Mail Transfer Protocol (SMTP).

10. The computer implemented method of one of the preceding claims, in which the server and the POS unit or a computer associated with said POS unit communicate bidirectionally via a distribution layer, said communication via the distribution layer including one or more of the following:
- receiving marketing material and matching information from the server at the POS unit or the computer associated with the POS unit,
- sending a report indicating how often and/or how long each of the pieces of marketing material have been displayed from the POS unit to the server,
- sending information summarizing the marketing material and the matching information currently stored in the POS unit or the computer associated with the POS unit to the server, preferably in form of a text file, and/or
- receiving updated marketing material or matching information from the server at the POS unit or the computer associated with the POS unit, in particular in response to a comparison of said information summarizing the marketing material and matching information currently stored in the POS unit or the computer associated with the POS unit with the current settings for the respective POS unit in the server.

11. The computer implemented method of one of the preceding claims, further comprising a step of linking, in a management module running on said server, pieces of marketing material with individual articles or one or more classes of articles, to generate said matching information for a plurality of legal entities, points of sale, POS units within a point of sale and/or displays of a POS unit.

12. The computer implemented method of one of the preceding claims, further comprising a step of receiving, at the server, information from a plurality of POS units or computers associated with said POS units summarizing the marketing material and the matching information currently stored in each respective POS unit,
comparing the received information with the current settings stored in the server, and distributing new or modified marketing material and/or matching information to the POS units or computers associated with said POS units based on this comparison.

13. A computer program product, comprising a display module having an interface for receiving information for identifying an article and an interface for receiving matching information for associating pieces of marketing material with single articles or one or more classes of articles, which when executed on a computer performs the methods steps according to one of claims 1 to 10.

14. The computer program product of claim 1,
further comprising a management module for administrating the linkage of marketing material with individual articles, or one or more classes of articles for a plurality of legal entities, points of sale, POS units within a point of sale and/or displays of a POS unit, wherein said management module, when executed on one or more server computers executes a method according to the features of claim 11 or 12.

15. The computer program product of claims 13 and 14,
further comprising a distribution layer for
- distributing marketing material and matching information from the server to a plurality of POS units or computers associated with said POS units,
- communicating reports to the server indicating how often and/or how long each of the pieces of marketing material have been displayed at each of a plurality of POS units,
- communicating to the server information summarizing the marketing material and the matching information currently stored in each of a plurality of POS units or computers associated with said POS units, preferably in form of a text file, and/or
- communicating updated marketing material or matching information from the server to said plurality of POS units or computers associated with said POS units, in particular in response to a comparison of said information summarizing the marketing material and matching information currently stored in each POS unit or its associated computer with the current settings for the respective POS unit in the server.
